**Europäisches Patentamt**

**European Patent Office**

**Office européen des brevets**

(11) Veröffentlichungsnummer: **0 424 752 A2**

(12) **EUROPÄISCHE PATENTANMELDUNG**

(21) Anmeldenummer: **90119572.7**

(22) Anmeldetag: **12.10.90**

(51) Int. Cl.5: **F16H 3/42**

(30) Priorität: **25.10.89 DE 3935446**
**14.04.90 DE 4012244**

(43) Veröffentlichungstag der Anmeldung:
**02.05.91 Patentblatt 91/18**

(84) Benannte Vertragsstaaten:
**DE FR GB IT**

(71) Anmelder: **GKN AUTOMOTIVE AKTIENGESELLSCHAFT**
**Alte Lohmarer Strasse 59**
**W-5200 Siegburg(DE)**

(72) Erfinder: **Riemscheid, Helmut**
**Heiligenstock 53**
**W-5204 Lohmar 21(DE)**
Erfinder: **Cremerius, Rolf**
**Friedrich-Wöhler-Strasse 25**
**W-5300 Bonn 1(DE)**
Erfinder: **Bentz, Hans-Joachim**
**Witerringstrasse 40**
**W-4300 Essen(DE)**

(74) Vertreter: **Neumann, Ernst Dieter, Dipl.-Ing. et al**
**HARWARDT NEUMANN PATENTANWÄLTE**
**Scheerengasse 2 Postfach 1455**
**W-5200 Siegburg(DE)**

(54) **Stufenlos regelbares Getriebe.**

(57) Stufenlos regelbares Getriebe mit formschlüssiger Kraftübertragung durch den Eingriff einer Zahnpaarung, mit einer ersten Verzahnungsanordnung mit Zahnsegmentstangen, die in Richtung einer Antriebswelle, mit der sie drehfest sowie axial verschiebbar und feststellbar verbunden sind, verlaufende Zähne gleichbleibenden Querschnitts mit gekrümmten Mittellinien aufweisen, einer zweiten Verzahnung an einem Zahnrad, das in Richtung einer Abtriebswelle, mit der es verbunden ist, verlaufende Zähne von veränderlichem Querschnitt mit gekrümmten Mittellinien in konkaver Form aufweist, die ausgehend von einem minimalen mittleren Querschnitt des Zahnrades zu dessen Seiten hin eine positive Profilverschiebung und eine Teilungsöffnung aufweisen.

Fig. 5

EP 0 424 752 A2

# STUFENLOS REGELBARES GETRIEBE

Die Erfindung betrifft ein stufenlos regelbares Getriebe mit formschlüssiger Kraftübertragung durch den diskontuierlichen Eingriff von Zahnpaarungen.

Getriebe mit veränderbarem Übersetzungsverhältnis dienen in der Regel zur Erweiterung des Drehzahlbereiches an der Abtriebswelle bei begrenztem Drehzahlbereich oder vorgegebener Drehzahl an der Antriebswelle. Insbesondere Verbrennungsmotoren für Kraftfahrzeuge, deren nutzbarer Drehzahlbereich im Vergleich mit dem Fahrbereich des Fahrzeuges gering ist, benötigen ein Übersetzungsgetriebe.

Stufenlos regelbare Getriebe haben den Vorteil, erhöhten Bedienungskomfort zu bieten und den Betrieb der Antriebsquelle im verbrauchsoptimierten oder leistungsoptimierten Bereich unabhängig von der geforderten Abtriebsdrehzahl zu ermöglichen. Bisher weisen stufenlos regelbare Getriebe schlechte Wirkungsgrade und/oder hohe Herstellungskosten auf.

Aufgabe der vorliegenden Erfindung ist es, ein Getriebe zu schaffen, das einen möglichst breiten stufenlosen Regelbereich aufweist und bei dem mit einfachen Mitteln die Drehrichtung im Abtrieb gewechselt werden kann.

Gelöst wird diese Aufgabe durch eine erste Verzahnungsanordnung mit Zahnsegmentstangen, die in Richtung von Umfangslinien zur Achse einer Antriebswelle, mit der sie drehfest sowie axial verschiebbar und feststellbar verbunden sind, verlaufende Zähne gleichbleibenden Querschnitts mit gekrümmten Mittellinien aufweisen, deren Krümmungsradius dem Drehradius der Zahnsegmentstangen um die Antriebsachse entspricht, eine zweite Verzahnung an einem Zahnrad, das in Richtung von Mantellinien zur Achse einer Abtriebswelle, mit der es verbunden ist, verlaufende Zähne von veränderlichem Querschnitt mit gekrümmten Mittellinien aufweist, deren Krümmungsradius dem der Zähne der Zahnsegmentstangen, jedoch in konkaver Form entspricht und die ausgehend von einem minimalen mittleren Querschnitt des Zahnrades zu dessen Seiten hin eine positive Profilverschiebung und eine Teilungsöffnung aufweisen, und durch eine Steuereinrichtung für die Zahnsegmentstangen, die eine mit diesen in Wirkverbindung stehende Umlaufführung umfaßt, die um zumindest eine senkrecht zu den Achsen der beiden genannten Wellen stehende Verstellachse schwenkbar ist.

Ein Getriebe der hiermit vorgegebenen Art kann bereits bei minimalen Drehzahlen maximale Abtriebsmomente erzielen, wobei innerhalb des Getriebes drehmomentübertragungsbegrenzende Mittel vorgesehen sein sollten. Bei gleichbleibender Antriebsdrehrichtung ist problemlos die Drehrichtungsumkehr im Abtrieb unter Durchlauf der Drehzahl null möglich. Das Getriebe weist eine Vielzahl von Gleichteilen auf, so daß es in der Herstellung sehr günstig ist.

Die Wirkungsweise des Getriebe besteht im wesentlichen darin, daß die verstellbare Steuereinrichtung den Zahnsegmentstangen insbesondere während des Zahneingriffs eine Axialkomponente in Richtung der Antriebsachse aufprägt, wodurch das Abtriebszahnrad angetrieben wird. Aufgrund der stufenlosen Charakteristik ist es bei einer starren, im wesentlichen in einer Ebene liegenden Umlaufführung für die Zahnsegmentstangen erforderlich, die Möglichkeit der Entkopplung zwischen den Zahnsegmentstangen und den mit ihnen drehfest verbundenen Stangen oder Spindeln zu ermöglichen, damit der richtige Zahneingriff zum Abtriebszahnrad gefunden werden kann. Um diesen bei jeweils entkoppelten Zahnsegmentstangen zu erleichtern, ist bevorzugt ein Synchronrad vorgesehen, das sich an das Abtriebszahnrad auf der Einlaufseite für die Zahnsegmentstangen tangential anschließt.

Bei einer ersten Ausführung ist es vorgesehen, daß die Umlaufführung aus beidendig im Bereich der Spindeln vorgesehenen Führungsscheiben besteht, die Führungsscheiben über angelenkte Kopplungsstangen miteinander verbunden sind und die Führungsscheiben mit den Kopplungsstangen gleichsinnig stufenlos zu den Spindeln anstellbar sind, wobei es vorteilhaft ist, daß die Anstellwinkel von ca. $+35^{\circ}$ bis ca. $-35^{\circ}$ variierbar sind, wobei die $0^{\circ}$ Stellung rechtwinklig zu der Antriebswelle verläuft.

Für eine optimale Steuerung und Regelung der Abtriebsdrehzahl ist es hierbei vorgesehen, daß die die Zahnsegmentstangen tragenden Spindeln beidendig in Gleitsteinen gehalten sind, wobei die Gleitsteine auf in Laufrillen geführten Kontaktkugeln in den Führungsscheiben um die Antriebswelle umlaufen. Hierbei ist es vorteilhaft, daß die Zahnsegmentstangen radial innen auf konzentrisch zu der Antriebswelle angeordneten Führungsschienen geführt sind, wobei die Führungsschienen in Prismen auf der Antriebswelle eingelassen und befestigt sind und die Gleitsteine radial innen auf den Führungsschienen gehalten und axial gegeneinander verschiebbar sind.

Um sicherzustellen, daß die Zahnsegmente sich während der Kraftübertragung nicht gegenüber dem Abtriebs-Zahnrad verschieben, ist es vorgesehen, daß die Zahnsegmentstangen, die Gleitsteine und die Spindel während der Wirkverbindung mit dem Abtriebs-Zahnrad eine starre, die jeweiligen Postitionen nicht verändernde Kraftübertra gungseinheit darstellen, wobei es zur Sicherstellung eines kraftübertragenden Kontaktes vorgesehen ist, daß Spindelzapfen an den axialen Enden der Spindeln in Bohrungen in den jeweils zugehörenden Gleitsteinen laufen, und durch jeweils zugeordnete Teller-Spreiz-Federn drehfest in den Bohrungen festlegbar sind, daß in die Bohrungen in den Gleitsteinen Kontakthülsen eingelegt sind, in den Kontakthülsen mit Federpaketen beaufschlagte Kontaktkugeln angeordnet sind und die Spindelzapfen der Spindeln über die Kontaktkugeln in den Gleitsteinen axial verschiebbar sind, und daß die Federpakete den drehfesten Kontakt zwischen den Gleitsteinen, den Kontaktkugeln und den Spindelzapfen der Spindeln über in den Gleitsteinen vorgesehene Kontaktstifte sicherstellen, wenn die Zahnsegmente auf den Spindeln im Bereich des Eingriffs mit dem Abtriebszahnrad sind.

Bei einer zweiten Ausführung ist vorgesehen, daß in die vorzugsweise nach innen offene Umlaufführung eingreifende Führungsstücke, die über die Spindeln oder Stangen mit den Zahnsegmentstangen verbunden sind, bevorzugt radiale Zapfen aufweisen, auf denen radial verschiebliche Rollen geführt sind. Diese können insbesondere nach Art von Schwenkrollenlagern ausgeführt sein.

Zur Erzielung einer gleichförmigen Abtriebsdrehzahl ist ein Abschnitt der Umlaufführung im Bereich des Zahneingriffs zwischen Zahnsegmentstangen und Abtriebszahnrad geradlinig ausgebildet und liegt stets in einer zu den Drehachsen der Antriebs- und Abtriebswelle jeweils parallelen Ebene. Die stufenlose Verstellung der Umlaufführung erfolgt durch Drehen oder Schwenken um eine Verstellachse, die senkrecht zu den Drehachsen der beiden Wellen steht. Um die vom Synchronrad auszugleichenden Zahnverschiebungen gering zu halten, ist es hierbei günstig, wenn diese Verstellachse die Achse der Antriebswelle mit Abstand rechtwinklig kreuzt und somit tangential zur Umlaufführung verläuft. Eine einfache Ausführung, bei der die Möglichkeit von zwei Abtriebswellen offenbleibt, liegt jedoch darin, daß die Verstellachse die Achse der Antriebswelle senkrecht schneidet. Dies ist beispielsweise zu bewerkstelligen mittels mit der Umlaufführung verbundenen Kreisscheiben oder Kreiszylindersegmenten, die insbesondere mittels einer am Kreisumfang angebrachten Verzahnung über eine Schnecke verstellbar sind.

Um axiale Baulänge zu sparen, sind die Spindeln, auf denen die Zahnsegmentstangen axial verschiebbar gehalten sind, als Hohlspindeln ausgeführt und gleiten auf mit der Antriebswelle ebenfalls umlaufenden Stangen. Zwischen Hohlspindeln und Stangen besteht jeweils eine drehfeste Verbindung, so daß eine axiale Festlegung der Zahnsegmentstangen gegenüber den Spindeln durch Feststellen der drehbaren Stangen erfolgen kann. Eine gehäusefeste Nockenbahn kann hierbei zur Betätigung einer Kupplungseinrichtung dienen. Die maximale Haltekraft ist hier ebenso wie bei der oben genannten Tellerfederanordnung so einzustellen, daß ein Schlupf möglich wird, damit nicht gegen unendlich gehende Übersetzungsverhältnisse zur Zerstörung von Teilen des Getriebes führen.

Bevorzugte Ausführungsbeispiele und verschiedene Abwandlungen der Abtriebs- und Synchronräder sind in den Zeichnungen dargestellt.

Fig. 1 die Vorderansicht eines ersten erfindungsgemäßen Getriebes mit um eine Antriebswelle konzentrisch angeordneten Zahnsegmentstangen und mit diesen kämmendem Abtriebs-Zahnrad;

Fig. 2 die Seitenansicht eines stufenlos regelbaren Getriebes nach der Figur 1;

Fig. 3 die Draufsicht auf ein stufenlos regelbares Getriebe nach der Figur 1,

Fig. 4 einen Längsschnitt durch die Sperrmittel für die Spindeln eines stufenlos regelbaren Getriebes, entsprechend dem Ausschnitt IV. in der Figur 1.

Fig. 5 zeigt einen senkrechten Längsschnitt durch ein zweites erfindungsgemäßes Getriebe,

Fig. 6 zeigt einen Horizontalschnitt durch das Getriebe nach Fig. 5,

Fig. 7 zeigt einen vertikalen Schnitt gemäß der Linie III-III durch das Getriebe nach Fig. 5,

Fig. 8 zeigt als Einzelheiten eine Antriebswelle mit Zahnsegmentstangen und zwei symmetrisch zueinander angeordneten Abtriebszahnrädern,

Fig. 9 zeigt einen Querschnitt durch ein Abtriebszahnrad,

Fig. 10 zeigt ein Abtriebszahnrad mit einem vorgeschaltetem Synchronrad in einer ersten Ausführung,

Fig. 11 zeigt eine Einzelheit nach Fig. 10,

Fig. 12 zeigt ein Abtriebszahnrad mit einem vorgeschaltetem Synchronrad in einer zweiten Ausführung,

Fig. 13 zeigt eine Einzelheit nach Fig. 12.

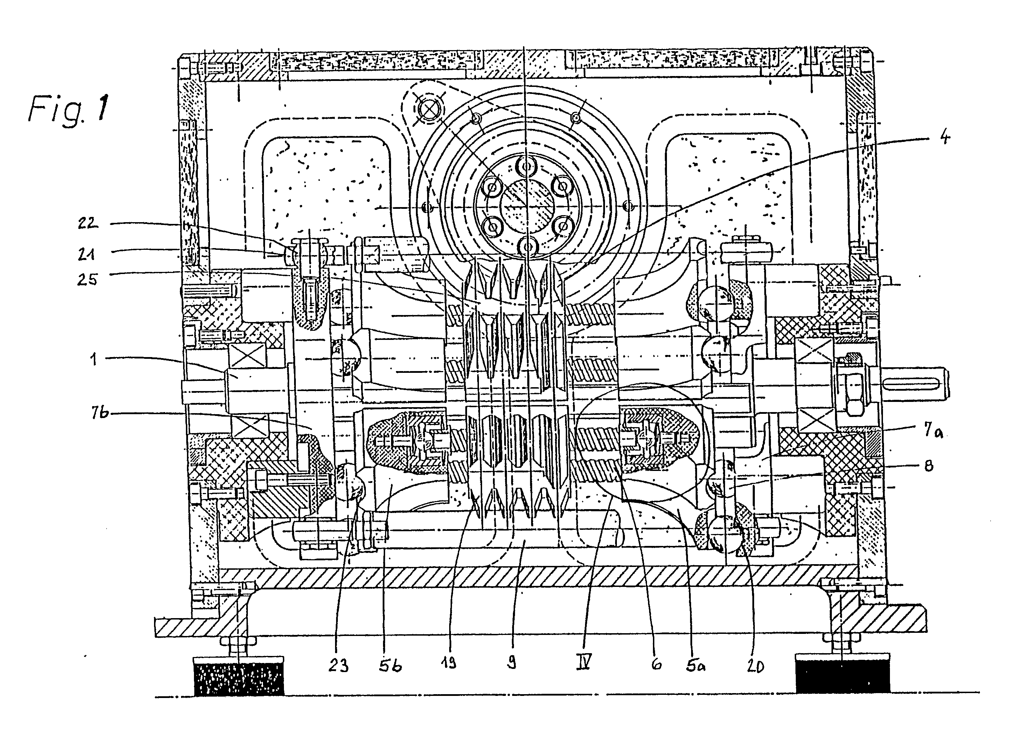

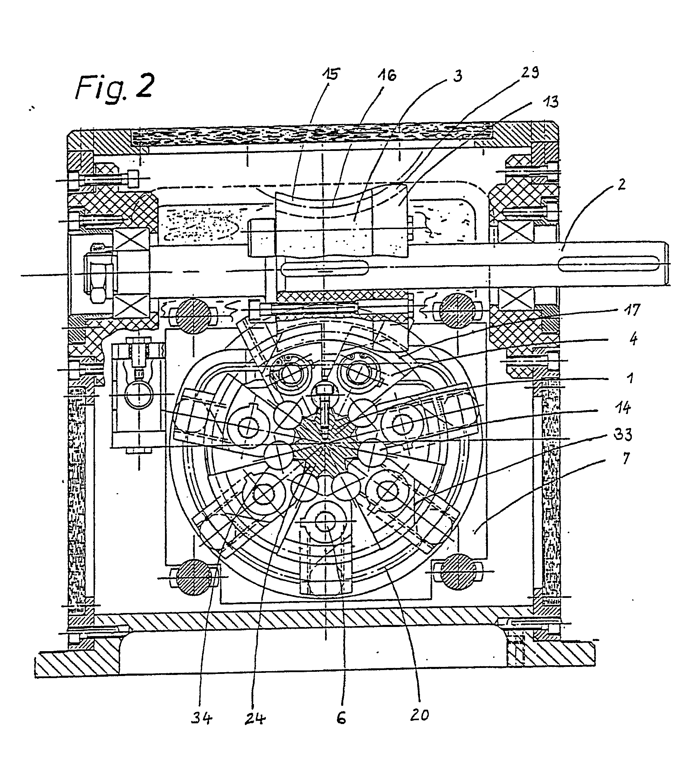

Das in den Figuren 1 und 2 dargestellte stufenlos regelbare Getriebe weist eine Antriebswelle 1 auf, um die konzentrisch rotierend Zahnstangensegmente 4 drehfest verbunden angeordnet sind. Rechtwinklig zu der Antriebswelle 1 verläuft die Abtriebswelle 2, auf der ein Abtrieb-Zahnrad 3 angeordnet ist, welches mit den Zahnstangensegmenten 4 in Wirkverbindung bringbar ist.

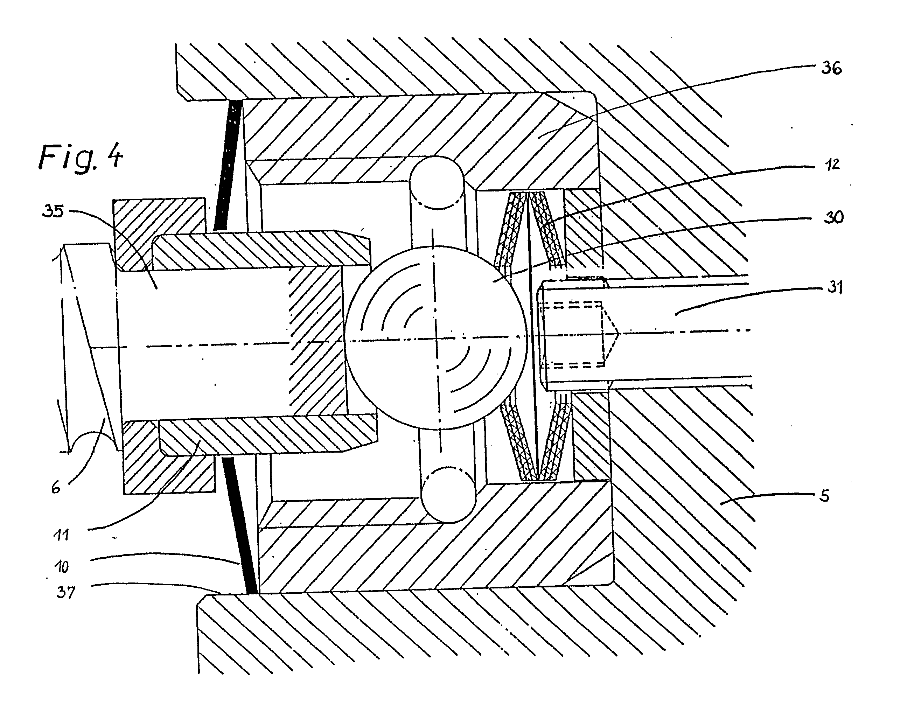

Die Spindeln 6 sind, wie die Figur 4 zeigt, beidendig in Gleitsteinen 5a, 5b geführt. Auf den den Spindeln 6 abgewandten Seiten sind die Gleitsteine 5a, 5b über Kontaktkugeln 8 an Führungsscheiben 7a, 7b abgestützt. Die Führungsscheiben 7a, 7b sind dazu mit Laufrillen 20 versehen, auf denen die Kontaktkugeln 8 umlaufen können. Die Führungsscheiben 7a, 7b sind über paarweise angeordnete untere Kopplungsstangen 9 und obere Kopplungsstangen 9a gleichsinnig verschiebbar miteinander verbunden. Die Kopplungsstangen 9a, 9b sind dazu an ihren Enden mit Kopplungsaufnahmen 21 versehen, die mit an den Führungsscheiben 7a, 7b befestigten Kopplungskugeln 22 angelenkt sind.

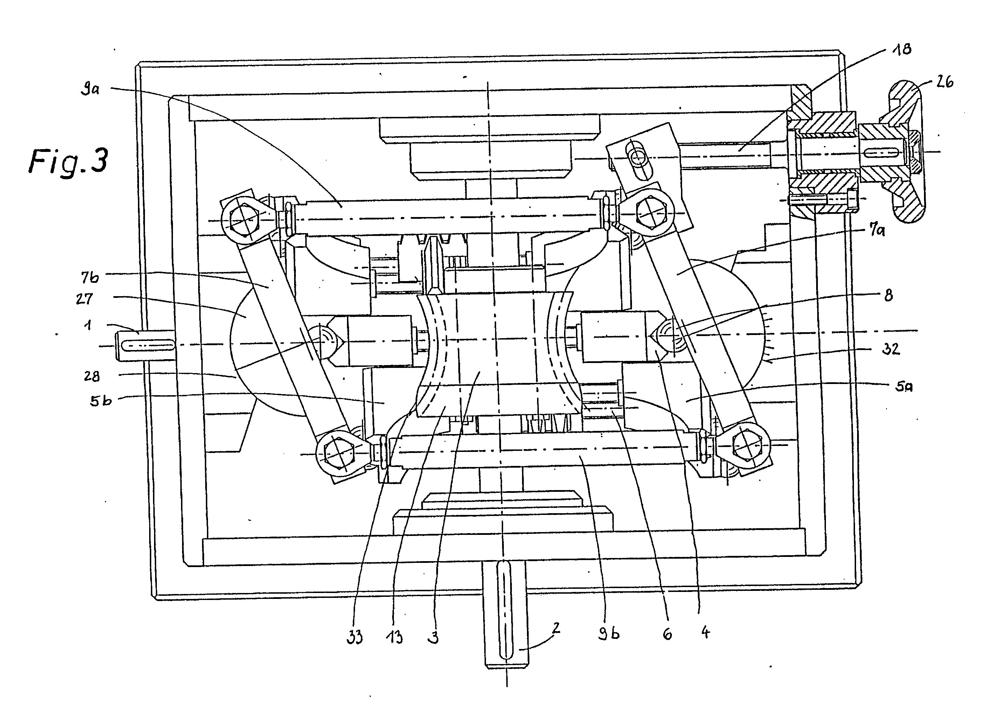

Wie die Figur 3 zeigt, sind die Führungsscheiben 7, 7a mit Zylindersegmenten 27 in Gleitschalen 28 in unterschiedlichen Anstellwinkeln zu der Antriebswelle 1 anstellbar.

Durch die Anstellwinkel 32 werden die Gleitsteine 5a, 5b relativ zueinander verschoben. Die Gleitsteine 5a, 5b sind dazu radial innen auf Führungsschienen 14 geführt. Mit den Gleitsteinen 5a, 5b werden gleichzeitig die Spindeln 6 und die auf ihnen angeordneten Zahnsegmentstangen 4 axial gegeneinander verschoben. Die Zahnsegmentstangen 4 sind dabei ebenfalls radial innen auf den Führungsschienen 14 geführt. Durch diese axiale Verschiebung der Zahnsegmentstangen 4 werden deren Zähne 19 bei einem Umlauf schräg gegenüber den Zähnen 15 des Antriebs-Zahnrades 3 versetzt und übertragen dabei einen Abtriebsmoment.

Die Zähne 15 des Abtrieb-Zahnrades 3 weisen einen Teilkreisradius 16 auf, der den Teilkreisradius 17 der Zahnsegmentstangen 4 tangiert. Die Zähne 15 des Abtriebs-Zahnrades 3 sind zur Abtriebswelle 2 konkav gedrückt. Dem Abtriebs-Zahnrad 3 ist an der einen Laufseite der Zahnsegmentstangen 4 ein Synchronrad 13 zugeordnet. Das Sychronrad 13 kann relativ zu dem Abtriebs-Zahnrad 3 verdreht werden.

Wie die Figur 2 zeigt, sind die Zähne 19 der Zahnsegmentstangen 4 an ihren Einlaufseiten mit Anschrägungen 33 versehen. Um einen störungsfreien Einlauf der Zähne 19 der Zahnsegmentstangen 4 in das Synchronrad 13 zu gewährleisten, sind sowohl die Zahnenden 29 am Synchronrad 13 als auch die Anschrägungen 33 an den Zahnsegmentstangen 4 in einem vorbestimmbaren Winkel spitz zusammenlaufend und radial schräg zueinander versetzt ausgeführt.

Wie die Figur 1 weiter zeigt, sind die Gleitsteine 5a, 5b auf der der Spindel entgegengesetzten Seite mit radialen Kugellaufbahnen 23 versehen, in denen die Kontaktkugeln 8 geführt sind. Die Gleitsteine 5a, 5b sind in Prismen oder Ausnehmungen 34 auf den Führungsschienen 14 axial verschiebbar. Der die axiale Verschiebung der Gleitsteine 5a, 5b bewirkende Anstellwinkel der Führungsscheiben 7a, 7b kann beispielsweise mit einem Verstellrad 26 variiert werden, wie dies in der Figur 3 dargestellt ist.

Die Anzahl der Zahsegmentstangen 4 ist zwar nicht festgelegt, jedoch soll der Trennungsabstand 25 zwischen den einzelnen Zahnsegmenten möglichst eng gehalten sein.

In Figur 3 ist von oben die Antriebswelle 1 und mit dieser im Eingriff befindliche mit umlaufende und axial verschiebliche Gleitsteine 5a, 5b dargestellt. Zwischen jeweils zwei Gleitsteinen sind Spindeln 6 vorgesehen, auf denen Zahnsegmentstangen 4 bei gesperrten Spindeln axial fest gehalten sind. Die Gleitsteine stützen sich an den parallel schräggestellten Führungsscheiben 7a, 7b ab, die über die Kopplungsstangen 9a, 9b parallel gehalten und über eine von einem Handrad 26 betätigbare Stellspindel 18 verstellbar sind. Die Führungsscheiben stützen sich jeweils über die Zylindersegmente 27 in den Gleitschalen 28 am Gehäuse ab. Der Kontakt zwischen Gleitsteinen 5a, 5b und Führungsscheiben 7a, 7b wird durch die Kontaktkugeln 8 bewirkt, die in Kugelrillen 23 an den Gleitsteinen 5a, 5b und in den nicht erkennbaren Rillen 20 in den Führungsscheiben 7a, 7b laufen und durch die Schrägstellung der Scheiben während des Eingriffs einer Zahnsegmentstange 4 mit dem auf der senkrecht zur Antriebswelle 1 liegenden Abtriebswelle 2 festgelegten Abtriebszahnrad 3 im Eingriff sind. Vor dem Abtriebszahnrad 3 ist ein Synchronrad 13 mit einer Anschrägung 33 der Zähne zum verbesserten Einlauf der Segmentstangenzähne 19 angeordnet. An einer Winkelskala 32 ist der das Übersetzungsverhältnis bestimmende Anstellwinkel der Führungsscheiben ablesbar, der über die Nullposition zu beiden Seiten hin einstellbar ist und somit die Drehrichtungsumkehr der Abtriebsseite bei gleichbleibendem Drehsinn der Antriebsseite ermöglicht.

Zur Sperrung der Relativbewegung zwischen den Spindeln 6, den Gleitsteinen 5a bzw. 5b und den Zahnsegmentstangen 4 sind, wie die Figur 4 zeigt, die Spindelzapfen 35 an den axialen Enden der Spindeln 36 jeweils mit einer aufgeschrumpften Hülse 11 versehen. Mit dieser aufgeschrumpften Hülse 11 sind die Spindeln 6 in eine axiale Bohrung 37 in den jeweils zugehörenden Gleitstein 5a bzw. 5b eingeführt. In dieser axialen Bohrung 37 ist eine Kontakthülse 36 vorgesehen, an der sich jeweils eine Teller-Spreiz-Feder 10 abstützt. Wirkt über den Gleitstein 5 eine Axialkraft auf die Teller-Spreiz-Feder 10, so übt diese eine Ringspannkraft auf die Hülse 11 aus und verhindert damit ein Verdrehen der Spindel 6. Die Spindel 6 ist dadurch drehfest mit dem Gleitstein 5 der jeweils zugehörenden Zahnsegmentstange 4 verbunden, wobei wie bei einer Reibkupplung überhöhte Drehmomente zu einem Rutschen führen können, um Zerstörungen im Getriebe zu vermeiden.

Um einen ständigen Kontakt zwischen einer Spindel 6 und dem zugehörenden Gleitstein 5 zu gewährleisten, ist auf der dem Spindelzapfen 35 entgegengesetzten Seite ein Federpaket 12 in der Kontakthülse 36 angeordnet. Dieses Federpaket 12 wirkt mit einem in dem Gleitstein 5 angeordnetem Kontaktstift 31 über eine Kontaktkugel 30 gegen den Spindelzapfen 35 der Spindel 6, so daß axiale Verschiebungen während eines Umlaufes auf den Führungsscheiben 7, 7a ausgeglichen werden können.

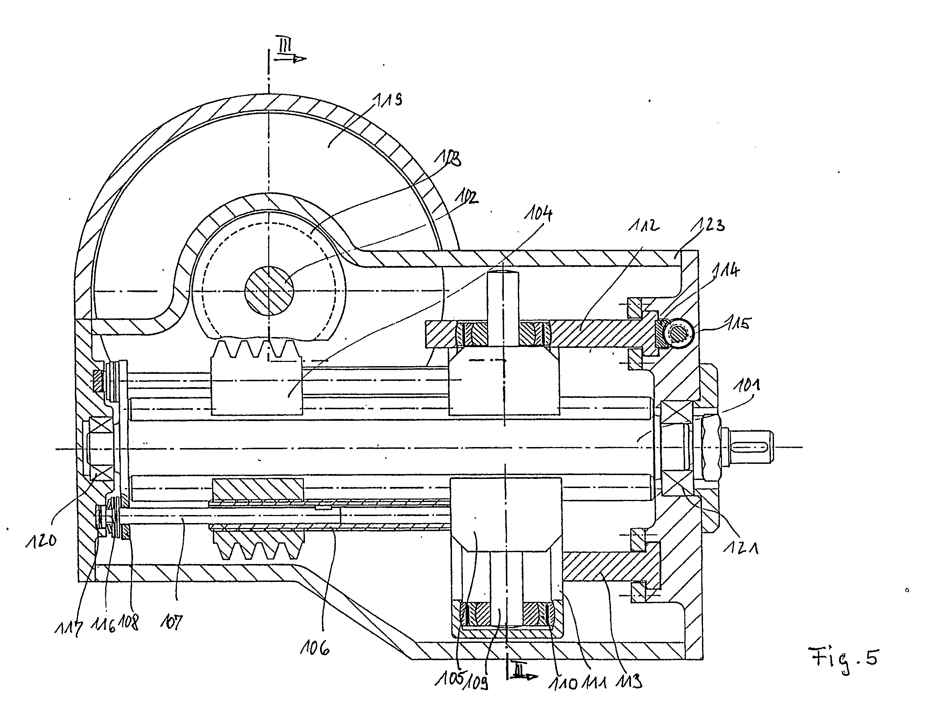

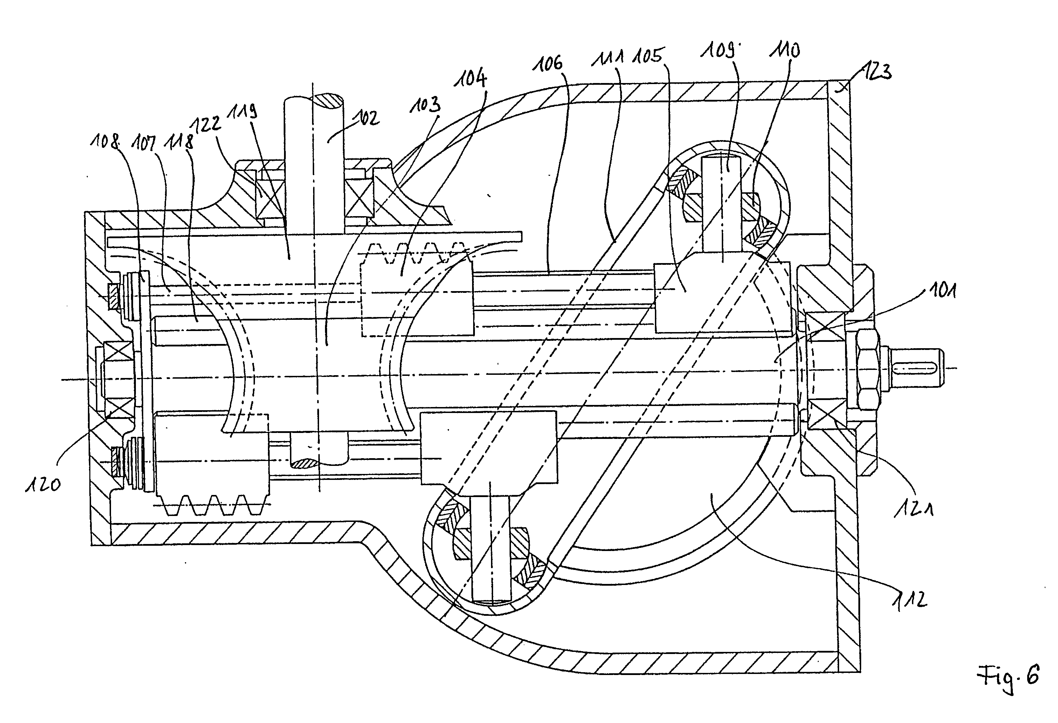

Das in den Figuren 5 bis 7 dargestellte stufenlos regelbare Getriebe weist eine Antriebswelle 101 auf, zu der Zahnsegmentstangen 104 drehfest jedoch axial verschieblich verbunden konzentrisch angeordnet ist.

Senkrecht die Antriebswelle 101 kreuzend verläuft eine Abtriebswelle 102, auf der ein Abtriebszahnrad 103 angeordnet ist, das mit den Zahnsegmentstangen 104 in Wirkbindung bringbar ist.

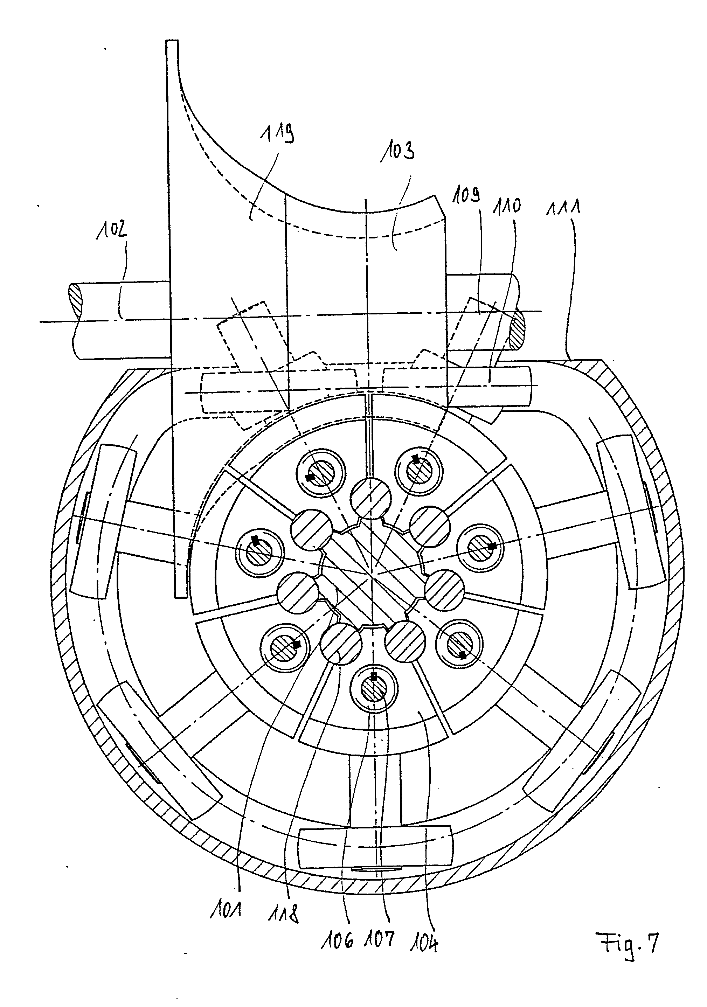

Die Zahnsegmentstangen 104 sind auf Hohlspindeln 106 axial verschiebbar, die an einem Ende in Steuerköpfen 105 drehbar gehalten sind. Die Hohlspindeln 106 gleiten auf Stangen 107 die gemeinsam in einer konzentrisch zur Antriebswelle 101 liegenden Kopfscheibe 108 gehalten sind. Zwischen Hohlspindeln und Stangen besteht eine drehfeste Verbindung. An den Spindeln 106 sind Kopfstücken 105 mit radialen Zapfen 109 angeordnet, auf denen Führungsrollen 110 nach Art Schwenkrollenlagern radial verschiebbar. Die Führungsrollen 110 greifen in eine im wesentlichen ringförmige jeweils nach innen offene Führungsbahn 111 ein, die wie Figur 2 zeigt, um eine senkrecht zu den senkrecht auf den Drehachsen der Wellen stehende Verstellachse schwenkbar ist und, wie Figur 3 zeigt, im Bereich des Zahneingriffs von Zahnsegmentstangen und Abtriebszahnrad in einer zu beiden Achsen parallelen Ebene geradlinig verläuft. Die schwenkbare Ausführung der Führungsrollen 110 ermöglicht einen sauber abwälzenden Eingriff zwischen Führungsrollen 110 und Führungbahn 111 in diesem Bereich. Die Führungsbahn 111 ist von einem oberen Kreisscheibensegment 112 gehalten und an einem unteren Kreisscheibensegment 113 abgestützt. Diese haben jeweils am Kreisbogen eine schwalbenschwanzähnliche Führung gegenüber dem Gehäuse 123, wobei am oberen Kreisscheibensegment 112 außen ein Zahnkranz 114 angeordnet ist, der über eine Verstellspindel 115 verdreht werden kann. Der Winkel zwischen der Mittelebene durch die Führungsbahn 111 und der Drehachse des Abtriebszahnrades bestimmt den axialen Hub der Zahnsegmentstangen 104 während eines Umlaufes ihrer Steuerköpfe 108 in der Führungsbahn 111 und damit insbesondere den axialen Vorschub während ihres Zahneingriffes mit dem Abtriebszahnrad 103. Wegen der stufenlosen Verstellung der Führungsbahn 111 ist außerhalb des Zahneingriffs die axiale Kopplung zwischen Zahnsegmentstangen 104 und Spindeln 106 aufzuheben. Nur während des Zahneingriffs ist über eine Reibkupplungsanordnung 116 am Ende der Stangen 107, die mit einer Nockenbahn 117 im Gehäuse zusammenwirkt, ein Feststellen der Stangen 107 und damit der Hohlspindeln 106 im Drehsinn und damit eine axiale Sicherung der Zahnsegmentstangen 104 in Bezug auf die Hohlspindeln 106 sichergestellt. Überhöhte Drehmomente können zu Sicherheitszwecken zu einem Durchrutschen führen, um Zerstörungen im Getriebe zu vermeiden. Wie in Figur 7 erkennbar, gleiten beim Vorschub der Kopfstücke 106 durch die Einwirkung der Führungsrollen 110 auf den Zapfen 109 sowohl die Kopfstücke 106 als auch die Zahnsegmentstangen 104 auf drehfest zur Antriebswelle 101 und gegeneinander abgestützten Führungsstangen 118 axial gegenüber der Antriebswelle 101. Zur Einführung der jeweils freigegebenen Zahnsegmentstangen 104 in den Zahneingriff mit dem Abtriebszahnrad 103 ist ein anschließendes im wesentlichen in einer radialen Fläche auslaufendes Synchronrad 119 vorgesehen, in dem die noch gegenüber der Spindel 106 axial verschieblichen Zahnsegmentstange 104 den Zahneingriff mit dem Abtriebsrad 103 finden. Vor Eintritt in das Abtriebszahnrad 103 werden diese jeweils dann mittels der Reibkupplungsanordnung 116 gegenüber der Hohlspindel 106 axial festgesetzt, um mittels ihrer axialen Bewegungskomponente die Drehmomentübertragung zu bewirken. Antriebswelle 101 und Abtriebswelle 102 sind in üblicher Weise in nur symbolisch dargestellten Lagern 120, 121, 122 im Gehäuse 123 gelagert.

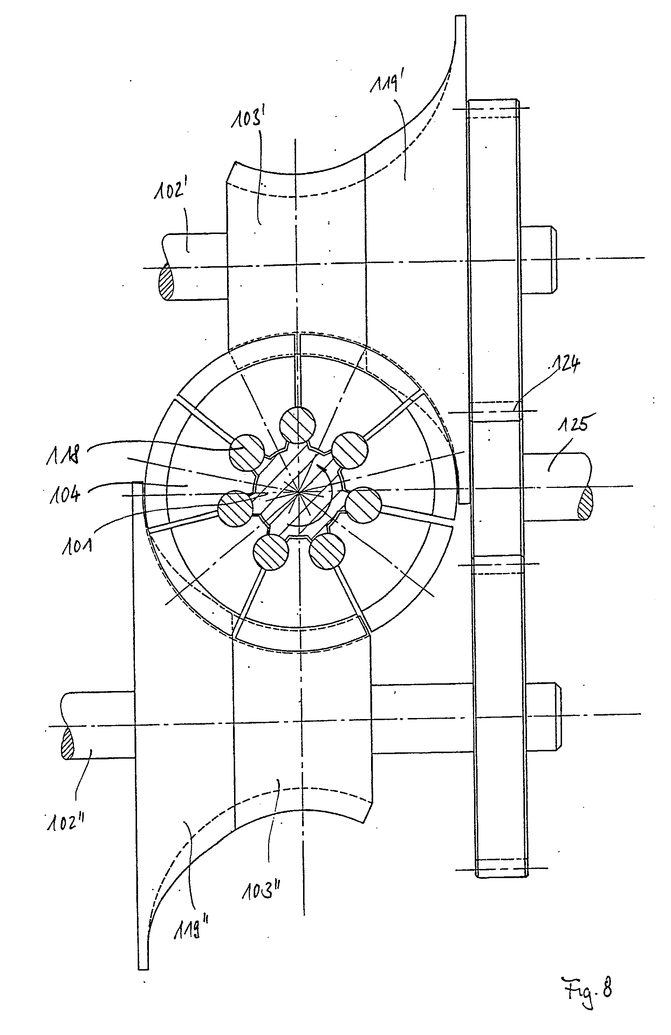

In Figur 8 ist dargestellt, wie durch eine symmetrische Tandemanordnung von zwei Abtriebszahnrädern 103', 103'' mit jeweiligen Synchronrädern 119', 119'' die Zahnsegmentstangen 104 jeweils auf einen größeren Teil ihres Bahnumfanges in Zahneingriff gebracht werden können. Hierzu ist es erforderlich, die Führungsbahn 111 auf beiden gegenüberliegenden Seiten im Bereich des Zahneingriffs abzuflachen und auf beiden geraden Bahnbereichen in beiden Richtungen gegenüber dem Gehäuse abzustützen. Die beiden Abtriebswellen 102', 102'' sind über ein Stirnrädergetriebe 124 zu koppeln, so daß sie auf einer gemeinsame Abtriebswelle 125 arbeiten.

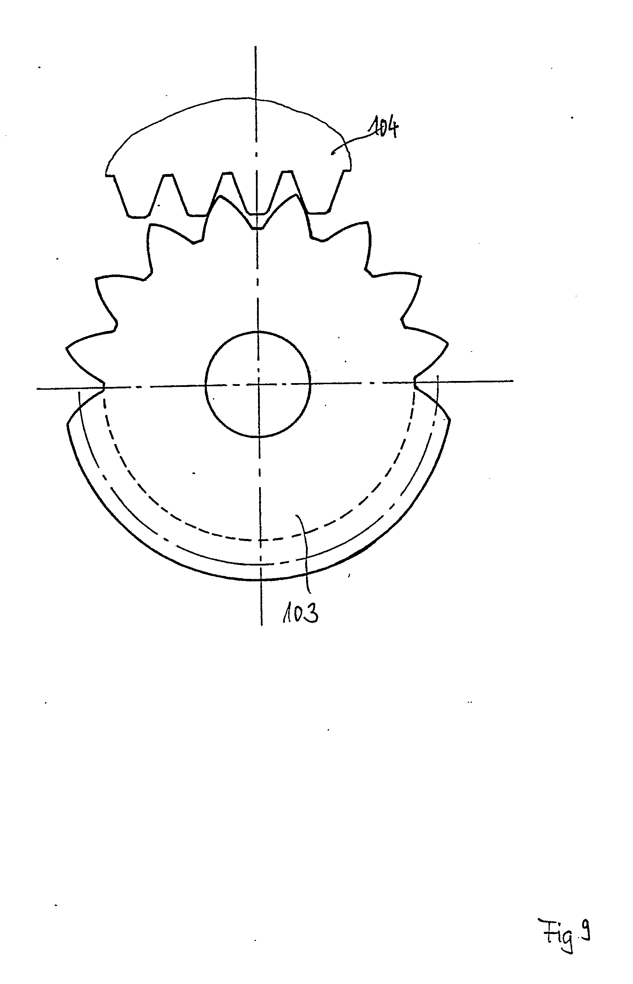

In Figur 9 ist der Querschnitt des Abtriebszahnrades 103 mit normaler Evolventenverzahnung und eine gradflankig verzahnte Zahnsegmentstange 104 dargestellt, die miteinander ständig im doppelten Zahneingriff sind.

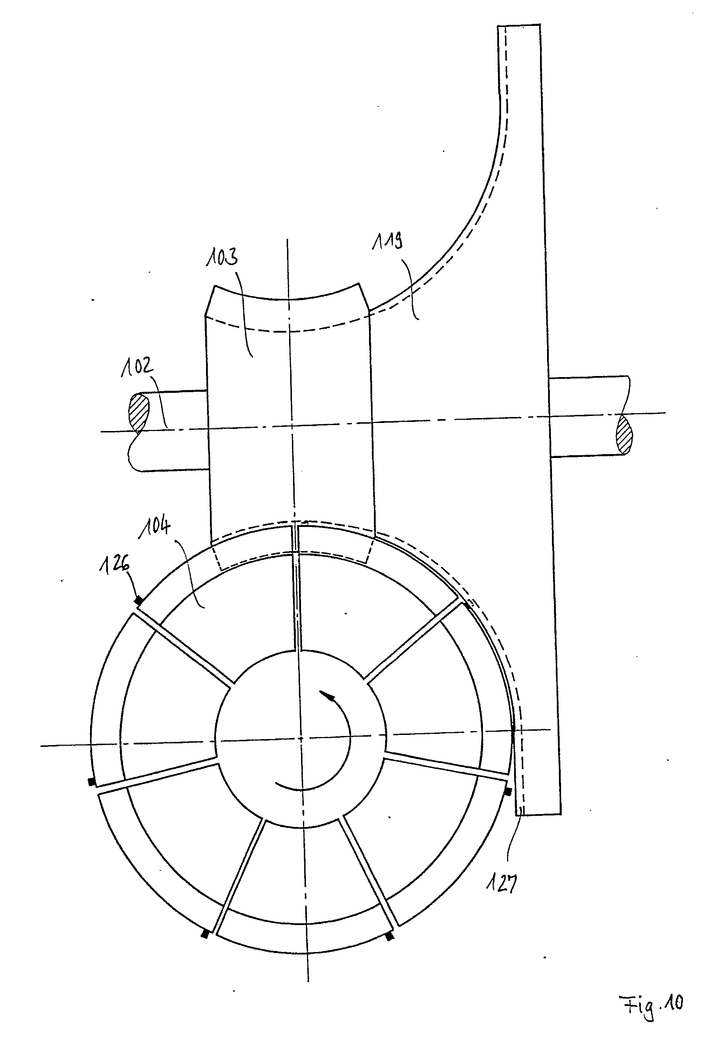

In Figur 10 ist ein Abtriebszahnrad 103 in üblicher Ausführung dargestellt, mit einem Synchronrad 119, das sich tangential an den Zahnfuß des Abtriebszahnrades 103 anschließt und etwa in einer radialen Fläche endet. An den Zahnsegmentstangen 104 sind federbelastete Führungsstifte 126 erkennbar, die mit Führungskanten 127 auf dem Synchronrad 119 zusammenwirken können.

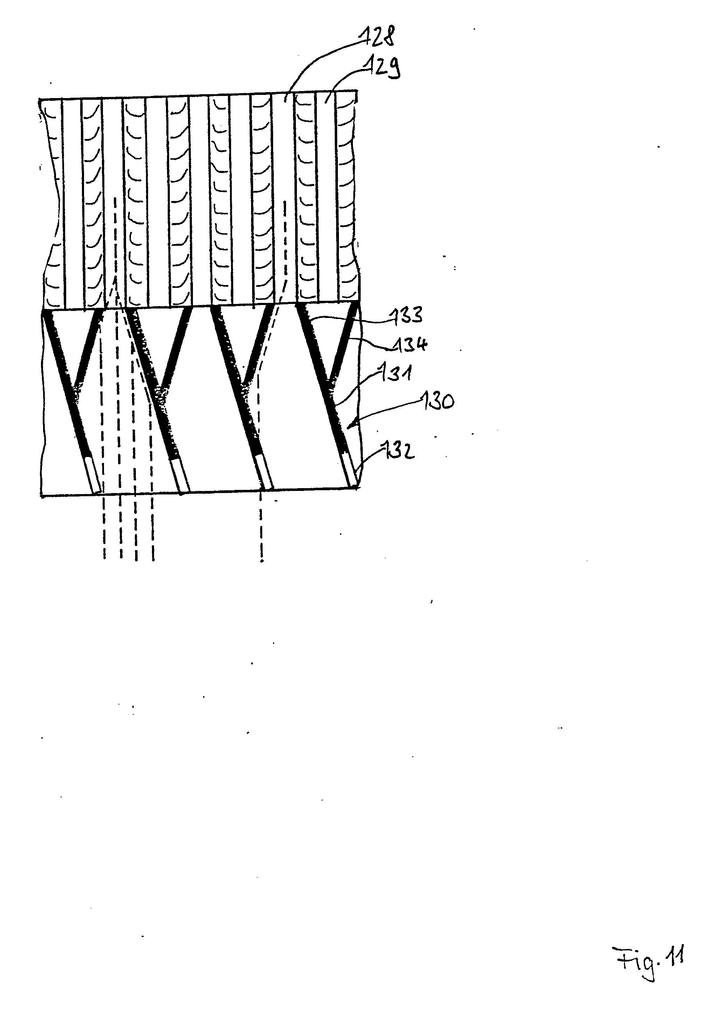

In Figur 11 sind Zahnfüße 128 und Zahnköpfe 129 der Abwicklung eines Abtriebszahnrades 103 erkennbar mit der davorliegenden Abwicklung eines Synchronrades 119, das Y-förmige Führungsleisten 130 aufweist an deren vorderen Ende 131 eine Anlaufschräge 132 ist und von deren sich gabelnden Schenkeln 133, 134 Führungsstifte oder -rollen von an den Zähnen der Zahnsegmentstangen 104 den Stirnseiten der Zähne des Abtriebszahnrades 103 abgelenkt und in die Bereiche der Zahnfüße 129 geführt werden. Mögliche Wege des Zahneinlaufs sind gestrichelt dargestellt.

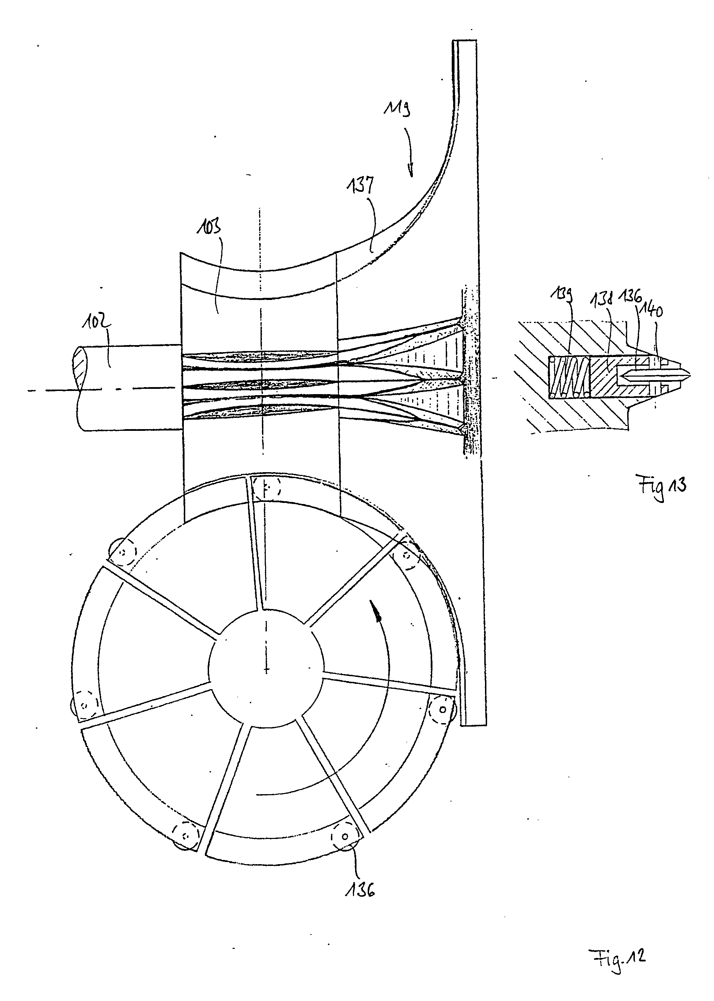

In Figur 12 ist ein Abtriebszahnrad 103 in üblicher Ausführung dargestellt, mit einem Synchronrad, das sich tangential mit identischer Zahnform an die Zähne des Abtriebszahnrades 103 anschließt und bei zunehmender positiver Profilverschiebung und Teilungsöffnung unter Verschwinden der Zähne in einer etwa radialen Fläche endet. An den Zahnsegmentstangen 104 sind federbelastete Rollen 136 erkennbar, die mit den Führungszähnen 137 auf dem Synchronrad 119 zusammenwirken können.

In Figur 13 ist eine Führungsrolle als Einzelheit im Schnitt dargestellt, die einen Rollenhalter 138, eine Druckfeder 139 und eine im Rollenhalter quer verschiebbare Achse 140 als Einzelheiten erkennen lassen.

Bezugszeichenliste

1 Antriebswelle
2 Abtriebswelle
3 Abtriebszahnrad
4 Zahnsegmentstange
5a rechter Gleitstein
5b linker Gleitstein
6 Spindel
7a rechte Führungsscheibe
7b linke Führungsscheibe
8 Kontaktkugel
9a untere Kopplungsstange
9b obere Kopplungsstange
10 Teller-Spreiz-Feder
11 Hülse
12 Federpaket
13 Synchronrad
14 Führungsschiene
15 Abtriebs-Zahnrad-Zahn
16 Teilkreisradius (Abtriebsrad)
17 Teilkreisradius (Zahnsegmente)
18 Stellspindel
19 Segmentstangenzahn
20 Laufrillen
21 Kopplungsaufnahme

22 Kopplungskugel
23 Kugellaufbahn
101 Antriebswelle
102 Abtriebswelle
103 Abtriebszahnrad
104 Zahnsegmentstange
105 Steuerkopf
106 Hohlspindel
107 Führungsstange
108 Kopfplatte
109 Zapfen
110 Führungsrolle
111 Führungsbahn
112 Kreisscheibensegment oben
113 Kreisscheibensegment unten
114 Zahnkranz
115 Verstellspindel
116 Bremsanordnung
117 Nockenbahn
118 Führungsstange
119 Synchronrad
120 Lager
121 Lager
122 Lager
123 Gehäuse
124 Stirnrädertrieb
125 Abtriebswelle
126 Führungsstift
127 Führungskante
128 Zahnfuß
129 Zahnkopf
130 Führungsleiste
131 Mittelschenkel
132 Anlaufschräge
133 Schenkel
134 Schenkel
135
136 Führungsrolle
137 Führungszahn
138 Gleitstück
139 Druckfeder
140 Rollenachse

## Ansprüche

1. Stufenlos regelbares Getriebe mit formschlüssiger Kraftübertragung durch einen diskontinuierlichen Eingriff von Zahnpaarungen,
gekennzeichnet durch
eine erste Verzahnungsanordnung mit Zahnsegmentstangen (4,104), die in Richtung von Umfangslinien zur Achse einer Antriebswelle (1,101), mit der sie drehfest sowie axial verschiebbar und feststellbar verbunden sind, verlaufende Zähne gleichbleibenden Querschnitts mit gekrümmten Mittellinien aufweisen, deren Krümmungsradius dem Drehradius der Zahnsegmentstangen (4,104) um die Antriebsachse (1,101) entspricht,

eine zweite Verzahnung an einem Zahnrad (3,103), das in Richtung von Mantellinien zur Achse einer Abtriebswelle (2,102), mit der es verbunden ist, verlaufende Zähne von veränderlichem Querschnitt mit gekrümmten Mittellinien aufweist, deren Krümmungsradius dem der Zähne der Zahnsegmentstangen (4,104), jedoch in konkaver Form entspricht und die ausgehend von einem minimalen mittleren Querschnitt des Zahnrades (3,103) zu dessen Seiten hin eine positive Profilverschiebung und eine Teilungsöffnung aufweisen, und

durch eine verstellbare Steuereinrichtung für die Zahnsegmentstangen (4,104), die eine mit diesen in Wirkverbindung stehende Umlaufführung (7,111) umfaßt, die um zumindest eine senkrecht zu den Achsen der beiden genannten Wellen (1,101, 2,102) stehende Verstellachse schwenkbar ist.

2. Getriebe nach Anspruch 1,
dadurch gekennzeichnet,
daß die Umlaufführung (7,111) auf zur Antriebswelle achsparallele, mit dieser umlaufende Stangen oder Spindeln (6,106) einwirkt, auf denen die Zahnsegmentstangen (4,104) axial verschiebbar und feststellbar sind, wobei die Zahnsegmentstangen (4, 104) und die Stangen oder Spindeln (6, 106) während der Wirkverbindung mit dem Abtriebszahnrad (3, 103) jeweils eine die relativen Positionen nicht verändernde Kraftübertragungseinheit darstellen.

3. Getriebe nach den Ansprüchen 1 oder 2,
dadurch gekennzeichnet,
daß die Umlaufführung beidendig an den Spindeln (6) vorgesehene Führungsscheiben (7) umfaßt, und die Führungsscheiben (7) über beidendig angelenkte Kopplungsstangen (9) miteinander verbunden sind.

4. Getriebe nach den Ansprüchen 1 bis 3,
dadurch gekennzeichnet,
daß die die Zahnsegmentstangen (4) tragenden Spindeln (6) beidendig in Gleitsteinen (5) gehalten sind, wobei die Gleitsteine (5,) auf in Laufrillen (20) geführten Kontaktkugeln (8) in den Führungsscheiben (7) um die Antriebswelle (1) umlaufen.

5. Getriebe nach den Ansprüchen 1 bis 4,
dadurch gekennzeichnet,
daß die Zahnsegmentstangen (4) radial innen auf konzentrisch zu der Antriebswelle (1) angeordneten Führungsschienen (14) geführt sind, wobei die Führungsschienen (14) in Prismen (24) auf der Antriebswelle (1) eingelassen und mit dieser verbunden sind.

6. Stufenlos regelbares Getriebe nach einem oder mehreren der Ansprüche 1 bis 5,
dadurch gekennzeichnet,
daß die Gleitsteine (5) radial innen auf den Führungsschienen (14) gehalten und axial gegeneinander verschiebbar sind.

7. Stufenlos regelbares Getriebe nach einem oder mehreren der Ansprüche 1 bis 6,
dadurch gekennzeichnet,
daß beidendige Spindelzapfen (35) der Spindeln (6) in Bohrungen (37) in den jeweils zugehörenden Gleitsteinen (5, 5a) laufen und durch jeweils zugeordnete Teller-Spreiz-Federn (10) drehfest in den Bohrungen (37) festlegbar sind.

8. Stufenlos regelbares Getriebe nach einem oder mehreren der Ansprüche 1 bis 7,
dadurch gekennzeichnet,
daß in die Bohrungen (37) in den Gleitsteinen (5, 5a) Kontakthülsen (36) eingelegt sind, in den Kontakthülsen (36) mit Federpaketen (12) beaufschlagte Kontaktkugeln (30) angeordnet sind und die Spindelzapfen (35) der Spindeln (6) über die Kontaktkugeln (30) in den Gleitsteinen (5) axial verschiebbar sind.

9. Stufenlos regelbares Getriebe nach einem oder mehreren der Ansprüche 1 bis 8,
dadurch gekennzeichnet,
daß die Federpakete (12) den Kontakt zwischen den Gleitsteinen (5), den Kontaktkugeln (30) und den Spindelzapfen (35) der Spindeln (6) über in den Gleitsteinen (5) vorgesehene Kontaktstifte (31) mit der Wirkung einer Reibkupplung.

10. Getriebe nach einem der Ansprüche 1 oder 2,
dadurch gekennzeichnet,
daß die Umlaufführung (111) eine nach innen offene Führungsbahn aufweist, in die Mitnehmerelemente eingreifen, die mit Kopfstücken (105) an den Stangen oder Spindeln (106) der Zahnsegmentstangen verbunden sind.

11. Getriebe nach Anspruch 10,
dadurch gekennzeichnet,
daß die Spindeln (106) als Hohlspindeln ausgeführt sind und auf zur Antriebswelle achsparallelen, mit dieser umlaufenden Stangen (107) gleiten.

12. Getriebe nach einem der Ansprüche 10 bis 11,
dadurch gekennzeichnet,
daß die Stangen (107) in den Hohlspindeln (106) drehfest mit diesen verbunden sind und unmittelbar feststellbar sind.

13. Getriebe nach einem der Ansprüche 10 bis 12,
dadurch gekennzeichnet,
daß die Mitnehmerelemente radiale Zapfen (109) aufweisen, auf denen Rollen (110) radial verschiebbar gehalten sind.

14. Getriebe nach Anspruch 10 bis 13,
dadurch gekennzeichnet,
daß die Rollen (110) wälzgelagert sind.

15. Getriebe nach einem der Ansprüche 10 bis 14,
dadurch gekennzeichnet,
daß die Rollen (110) nach Art von Schwenklagern ausgeführt sind.

16. Getriebe nach einem der Ansprüche 1 bis 15,
dadurch gekennzeichnet,
daß jeweils eine während des Eingriffs einer Zahnsegmentstange (4,104) mit dem Abtriebszahnrad (3,103) an der jeweiligen Stange (107) oder Spindel (6,106) wirksame Reibkupplung (10,116) vorgesehen ist.

17. Getriebe nach einem der Ansprüche 1 bis 16, dadurch gekennzeichnet,

daß die Zahnsegmentstangen (4,104) kugelumlaufgelagert auf den Stangen (104) oder Spindeln (6,106) laufen.

18. Getriebe nach einem der Ansprüche 1 bis 17, dadurch gekennzeichnet,

daß ein Abschnitt der Umlaufführung (7,111) im Bereich des Zahneingriffs der Zahnsegmentstangen (4,104) mit dem Abtriebszahnrad (3,103) in einer zu den Drehachsen der beiden Wellen (1,2, 101,102) parallelen Ebene geradlinig verläuft.

19. Getriebe nach einem der Ansprüche 1 bis 18, dadurch gekennzeichnet,

daß die Zahnsegmentstangen (4,104) und die Gleitsteine bzw. die Kopfstücke (105) auf mit der Antriebswelle in formschlüssigem Eingriff befindlichen Führungsschienen (14,118) gehalten und auf diesen axial verschiebbar sind.

20. Getriebe nach einem der Ansprüche 1 bis 19, dadurch gekennzeichnet,

daß die Umlaufführung (7,111) mit zu ihrer Verstellachse konzentrisch angeordneten und kreissegmentförmig ausgebildeten Führungsmitteln (27,112,113) verbunden ist, die um die Verstellachsen schwenkbar sind.

21. Getriebe nach Anspruch 20, dadurch gekennzeichnet,

daß die Führungsmittel zwei kreisbogenförmige Schwalbenschwanzführungen umfassen, von denen zumindest eine eine Außenverzahnung trägt, die mittels eines Schnekkenrades antreibbar ist.

22. Getriebe nach einem der Ansprüche 1 bis 21, dadurch gekennzeichnet,

daß die Verzahnung an den Zahnsegmentstangen (4,104) Zähne mit geraden Flanken aufweist.

23. Getriebe nach Anspruch 1 bis 22, dadurch gekennzeichnet,

daß die Verzahnung am Abtriebszahnrad (3,103) eine Evolventenverzahnung ist.

24. Getriebe nach einem der Ansprüche 1 bis 23, dadurch gekennzeichnet,

daß am Abtriebszahnrad (3,103) auf der Einlaufseite der Zahnsegmentstangen (4,104) ein Synchronrad (13,119) unmittelbar tangential anschließt, dessen Zähne mit zunehmender positiver Profilverschiebung verschwinden und das in einer nahezu radialen Fläche ausläuft.

25. Getriebe nach einem der Ansprüche 1 bis 23, dadurch gekennzeichnet,

daß am Abtriebszahnrad (3,103) auf der Einlaufseite der Zahnsegmentstangen (4,104) ein Synchronrad (13,119) unmittelbar tangential anschließt, das bei jeweils runden Querschnitten an den Zahnfüßen ansetzt und in einer nahezu radialen Fläche ausläuft und auf der Leitrippen (130) aufgesetzt sind, die jeweils eine Stirnfläche eines Zahns des Abtriebszahnrades (3,103) einfassen.

26. Getriebe nach einem der Ansprüche 24 oder 25, dadurch gekennzeichnet

daß an den Einlaufstirnseiten der Zähne der Zahnsegmentstangen (4,104) zum Abtriebszahnrad (3,103) federbelastete radial absenkbare Leitrollen (136) oder Leitstifte (126) vorgesehen sind.

27. Getriebe nach Anspruch 26, dadurch gekennzeichnet,

daß die Leitrollen (136) quer zur Einlaufrichtung mit Spiel gelagert sind.

28. Stufenlos regelbares Getriebe nach einem oder mehreren der Ansprüche 1 bis 27, dadurch gekennzeichnet,

daß zwei symmetrisch zur Antriebswelle (1,101) angeordnete Anordnungen mit je einer Abtriebswelle (107) vorgesehen sind, deren Abtriebsräder (3,103) auf gegenüberliegenden Seiten mit den Zahnsegmentstangen (104) im Eingriff sind.

Fig. 1

Fig. 2

Fig.3

EP 0 424 752 A2

Fig. 4

Fig. 5

Fig. 6

EP 0 424 752 A2

Fig. 7

Fig. 8

Fig 9

Fig. 10

Fig. 11

119

137

103

102

139 138 136 140

Fig 13

136

Fig. 12